# EUROPÄISCHE PATENTSCHRIFT

(11) **EP 1 669 512 B1**
(45) Veröffentlichungstag und Bekanntmachung des Hinweises auf die Patenterteilung: **20.04.2011**
(21) Anmeldenummer: 06000431.4
(22) Anmeldetag: 04.07.2002
(51) Int. Cl.: E04F 15/02, F16B 5/00

(54) **Sperrelement zur Verwendung in einer Hakenverbindung von viereckigen tafelförmigen Paneelen**
Locking element for use in a hook connection between rectangular, tabular panels
Elément de blocage à utiliser dans une liaison par crochets entre des panneaux quadrangulaires en forme de plaques

(30) Priorität: 10.08.2001 DE 10138285
(43) Veröffentlichungstag der Anmeldung: 14.06.2006
(62) Teilanmeldung aus: 02754315.6
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Lippert, Stachow & Partner

(56) Entgegenhaltungen:
- WO-A-00/47841
- WO-A-01/02669
- WO-A-01/51732
- WO-A-84/02155
- WO-A-96/27719
- WO-A-98/40583
- WO-A-99/66151
- SE-C- 515 324
- US-A- 5 274 979

## Beschreibung

Die Erfindung betrifft ein Sperrelement als Zusatz für ein Befestigungssystem für viereckige tafelförmige Paneele, insbesondere Fußbodenpaneele, mit an den Schmalseiten der Paneele angeordneten Halteprofilen, von denen gegenüberliegend angeordnete Halteprofile derart zueinander passen, dass gleichartige Paneele miteinander verbindbar sind, insbesondere für Fußbodenpaneele, mit gegenüberliegend angeordneten ersten Halteprofilen, die so ausgebildet sind, dass an einem in erster Reihe liegenden Paneel in zweiter Reihe ein neues Paneel verriegelbar ist, in dem das neue Paneel zunächst in Schrägstellung relativ zu dem liegenden Paneel an das liegende Paneel angefügt und nachfolgend in die Ebene des liegenden Paneels herabgeschwenkt wird, sowie mit gegenüberliegend angeordneten zweiten Halteprofilen, die korrespondierende Hakenelemente aufweisen, wobei mit einem der Hakenelemente des neuen Paneels und einem Hakenelement eines bereits in zweiter Reihe liegenden Paneels durch das Herabschwenken des neuen Paneels eine Hakenverbindung herstellbar ist, wobei jeder Hakenverbindung ein solches Sperrelement zugeordnet ist, das im verhakten Zustand zweier Paneele ein Lösen der Hakenverbindung in einer Richtung senkrecht zu der Ebene der verlegten Paneele unterbindet.

Ein Befestigungssystem ohne zusätzliches Sperrelement ist aus der DE 199 29 896 A1 bekannt. Charakteristisch ist für ein solches Befestigungssystem, dass die verwendeten ersten und zweiten Halteprofile stark unterschiedliche Geometrien aufweisen und sich dadurch auch die Fügeweisen der verschiedenartigen Halteprofile sehr unterscheiden. Insbesondere die als Hakenelemente ausgebildeten zweiten Halteprofile, die zu einer Hakenverbindung zusammengefügt werden, bergen ein technisches Problem. Zwar sichert die bekannte Hakenverbindung Fußbodenpaneele gut gegen ebenes Auseinanderschieben rechtwinklig zu den Schmalseiten der verbundenen Paneele. Allerdings bietet sie keine befriedigende Festigkeit gegen ein Lösen der Hakenelemente in einer Richtung senkrecht zu der Verlegeebene der Paneele.

Bevorzugt angewendet wird ein derartiges Befestigungssystem für sogenannten Laminatfußboden, der einen Kern aus Holzwerkstoff, wie MDF, HDF oder Spanplattenmaterial aufweist. Die mechanischen Halteprofile sind zumeist an die Schmalseiten von Holzwerkstoffplatten angefräst.

Laminatfußboden wird überwiegend schwimmend verlegt. Zur Minderung von Trittschall wird üblicherweise eine trittschalldämmende Zwischenlage zwischen dem Verlegeuntergrund und den Laminatpaneelen angeordnet. Auch bekannt ist es, dass eine trittschalldämmende Schicht an der dem Verlegeuntergrund zugewandten Unterseite von Laminatpaneelen fest angebracht ist.

Besonders problematisch ist die Hakenverbindung des bekannten Befestigungssystem dann, wenn im Bereich einer Hakenverbindung nur dasjenige Paneel mit einer großen Last beaufschlagt ist, dessen Hakenelement unten liegt, nämlich dem Verlegeuntergrund zugewandt ist. Das mit diesem verhakte obenliegende Hakenelement des benachbarten Paneels ist nicht belastet daher wird durch die Last nur das Paneel mit dem untenliegenden Hakenelement in die zumeist weiche trittschalldämmende Zwischenlage gedrückt. Dabei löst sich das obenliegende Hakenelement des unbelasteten Paneels aus dem untenliegenden Hakenelement des benachbarten Paneels. Die Hakenverbindung ist außer Funktion und die Funktion meist nicht wieder herstellbar.

Nach dem Stand der Technik sind Hinterschneidungen in die Hakenverbindung integriert, durch die ein Lösen der Hakenverbindung senkrecht zur Verlegeebene der Paneele verhindert werden soll. Diese Hinterschneidungen haben sich jedoch als unzureichend erwiesen, dieser Art von Befestigungselementen eine ausreichende Festigkeit zu verleihen.

Aus der WO 01/51732 A1 sind verschiedene Ausführungsbeispiele eines Befestigungssystems für viereckige tafelförmige Paneele bekannt. Eines der Ausführungsbeispiele schlägt als Zusatz für das Befestigungssystem ein gattungsgemäßes Sperrelement vor. Das bekannte Sperrelement ist als "Fremdfeder" bezeichnet. Es muss nach der Herstellung der Hakenverbindung in dieselbe eingefügt werden. An der Schmalseite einer Paneelreihe wird Platz benötigt, um die "Fremdfeder" einfügen zu können. In der Nähe einer Wand bereitet das Einfügen des bekannten Sperrelements Schwierigkeiten.

Ein Sperrelement, das für eine Hakenverbindung von Paneelen vorgeschlagen wird, die nicht durch eine Schwenkbewegung eines der Paneele verhakt werden sollen, ist aus der WO 00/47841 A1 bekannt.

Der Erfindung liegt die Aufgabe zugrunde, ein verbessertes Sperrelement vorzuschlagen, das den Problemen des als "Fremdfeder" bekannten Sperrelements abhilft, welches für Paneele vorgesehen ist, die durch eine Schwenkbewegung eines der Paneele verhakt werden.

Erfindungsgemäß wird die Aufgabe dadurch gelöst, dass das Sperrelement eine federnde Rastlasche aufweist und derart ausgebildet ist, dass es in einer Sperrnut eines der Hakenelemente eines ersten Paneels anzuordnen ist, wobei eine Sperrnut des zugeordneten Hakenelements der gegenüberliegenden Schmalseite eines zweiten Paneels eine hinterschnittene Rastvertiefung bildet, in die die Rastlasche des Hakenelements des ersten Paneels während der Montage selbsttätig einrastbar ist, und wobei das Sperrelement so ausgebildet ist, dass die Rastlasche im entspannten Zustand von der Schmalseite weit hervorsteht, so dass die Rastlasche während des Herabschwenkens des ersten Paneels in die Ebene der verlegten Paneele mit dem Hakenelement des zweiten Paneels in Berührung kommt und automatisch soweit zurückklappbar ist, dass die Rastlasche an der Schmalseite nicht mehr über das äußere Ende des Hakenelements des ersten Paneels hinausragt.

Bei dem Sperrelement kann es sich um ein sehr einfaches Bauteil handeln, für das es vielfältige konstruktive Ausgestaltungen gibt. Es kann sich um ein Sperrelement handeln, das an einem der Hakenelemente vormontiert ist, um ein loses Sperrelement, das nach dem Verhaken der Hakenelemente angebracht wird, oder um ein in das Kernmaterial des Paneels integriertes Sperrelement.

In einer besonders einfachen Ausführung weist jedes der Hakenelemente der gegenüberliegenden Schmalseiten eines Paneels eine Sperrnut auf, die sich in Längsrichtung der Schmalseite erstreckt. Die Sperrnuten zweier Paneele grenzen dabei im verbundenen Zustand der Hakenelemente aneinander und bilden eine gemeinsame Sperrausnehmung. Bei der Profilierung der Hakenelemente mit Fräswerkzeugen lassen sich die Sperrnuten sehr einfach mitfräsen. Hierzu müssen entsprechende Konturen an den Fräswerkzeugen vorgesehen sein.

Wenn die Sperrausnehmung einen runden oder rechteckigen Querschnitt aufweist, hat dies den Vorteil, dass als Sperrelemente besonders kostengünstiges Standardmaterial verwendet werden kann.

Bevorzugt dann, wenn es sich um ein einfaches Sperrelement mit rundem oder mehreckigem Querschnitt handelt, ist es vorteilhaft, wenn die Sperrnuten an solchen Flächen eines Hakenelements vorgesehen sind, die im verlegten Zustand der Paneele etwa senkrecht zu der Ebene ausgerichtet sind, in der die Paneele verlegt sind.

Bei einer weiteren Alternative eines Befestigungssystems ist das Sperrelement in einer Sperrnut eines der Hakenelemente eines ersten Paneels angeordnet und weist eine federnde Rastlasche auf. Dabei bildet eine Sperrnut des zugeordneten Hakenelements der gegenüberliegenden Schmalseite eines zweiten Paneels eine hinterschnittene Rastvertiefung, in der die Rastlasche des Hakenelements des ersten Paneels während der Montage selbsttätig einrastbar ist.

Diese Konstruktion kann einfacherweise mit einem Sperrelement versehen sein, das eine im entspannten Zustand von der Schmalseite weit hervorstehende Rastlasche aufweist, die während des Herabschwenkens eines neuen Paneels in die Ebene der verlegten Paneele mit dem Hakenelement des benachbarten Paneels in Berührung kommt und automatisch soweit zurückgeklappt wird, dass die Rastlasche an der Schmalseite nicht mehr über das äußere Ende des Hakenelements hinausragt. Wenn die Hakenverbindung nahezu ihre Verriegelungsposition erreicht hat, federt die Rastlasche selbsttätig in die Rastvertiefung des Hakenelements des benachbarten Paneels hervor und verriegelt die Hakenverbindung in vertikaler Richtung, nämlich senkrecht zur Ebene der verlegten Paneele.

Ein derartig selbsttätiges Rastelement kann in einem der Hakenelemente vormontiert sein oder lose beiliegen, damit es der Verleger selbst während der Verlegung der Paneele an dem dafür vorgesehenen Hakenelement anbringen kann.

Das selbsttätige Sperrelement sowie die Rastvertiefung sind zweckmäßigerweise so ausgebildet, dass das Sperrelement jederzeit mit einem einfachen Werkzeug, beispielsweise einer spitzen Zange leicht in Längsrichtung der Schmalseiten aus der Hakenverbindung herausgezogen werden kann, wenn die Paneele demontiert werden müssen. Dazu ist zu beiden Seiten der Rastlasche ein freier Zwischenraum vorgesehen, damit eine Zange angesetzt werden kann.

Der prinzipielle Vorteil der Verriegelung mittels eines einrastenden Sperrelements gegenüber einem einzuschiebenden Sperrelement ist, dass vor der Schmalseite einer Paneelreihe kein Raum benötigt wird, um das Sperrelement an eine Sperrausnehmung anzusetzen und in diese einzuschieben. Ein einzuschiebendes Sperrelement lässt sich nahe einer Wand nicht mehr in eine Sperrausnehmung einfügen, wohingegen das einrastbare Sperrelement problemlos seitlich an eines der Hakenelemente angefügt und durch Herabschwenken eines neuen Paneels verriegelt werden kann.

Mit einer weiteren nützlichen Verbesserung ist bezweckt, dass in ein und derselben Sperrausnehmung, die durch Sperrnuten zweier Hakenelemente gebildet ist, unterschiedliche Sperrelemente verwendet werden können, die unterschiedliche Geometrien aufweisen und durch unterschiedliche Mechanismen der Verriegelung der Hakenverbindung die erforderliche Festigkeit verleihen. Zu diesem Zweck sind die Sperrnuten und Sperrelemente besonders aufeinander abgestimmt. Dabei ist entweder ein stabförmiges Sperrelement in seiner Längsrichtung in die Sperrausnehmung einschiebbar oder alternativ ein Sperrelement in derselben Sperrausnehmung aufnehmbar, das eine federnde Rastlasche aufweist, wobei dann eine der Sperrnuten eine Halteaufnahme für das mit der Rastlasche versehene Sperrelement bildet und die zugeordnete Sperrnut eine hinterschnittene Rastvertiefung bildet, in die die federnde Rastlasche während der Montage der Hakenverbindung selbsttätig einrastbar ist.

Ein Paneel mit einem erfindungsgemäßen Befestigungssystem weist zwei unterschiedliche Arten miteinander zusammenwirkender Halteprofile auf. Diejenigen Halteprofile, über die die einzelnen Verlegereihen eines Fußbodens miteinander verriegelt,sind, weisen Halteprofile auf, die nach dem Prinzip: Schräges Ansetzen eines neuen Paneels und anschließendes Herabschwenken desselben verriegelt werden. Die hierfür benötigte Art Halteprofil ermöglicht es, ein neues Paneel durch eine scharnierartige Schwenkbewegung an einer verlegten Paneelreihe mechanisch zu verriegeln. Die einzelnen Paneelreihen sind dadurch gegen ebenes Auseinanderziehen in einer Richtung senkrecht zu den verriegelten Halteprofilen gesichert.

An den übrigen beiden Schmalseiten eines Paneels sind Halteprofile in Form von Hakenelementen angebracht, wobei ein erstes Hakenelement von der Schmalseite hervorsteht und im verlegten Zustand dem Verlegeuntergrund zugewandt ist und das zweite Hakenelement von der Schmalseite hervorsteht und der dekorativen Oberseite des Paneels zugewandt ist. Beide Hakenelemente einer Hakenverbindung sind durch ein zusätzliches Sperrelement gegen ein Auseinanderbewegen senkrecht zur Ebene der verlegten Paneele gesichert.

Nachstehend ist die Erfindung in einer Zeichnung beispielhaft dargestellt und anhand der Figuren detailliert beschrieben.

Es zeigen:
- Fig. 1: eine perspektivische Darstellung eines Halteprofils, das durch schräges Ansetzen eines neuen Paneels und anschließendes Herabsenken in die Verlegeebene mecha- nisch zu verriegeln ist,
- Fig. 2: das schräge Ansetzen der Halteprofile gemäß Figur 1,
- Fig. 3: die Halteprofile gemäß Figur 1 im verriegelten Zu- stand,
- Fig. 4: Halteprofile in Form von Hakenelementen gemäß dem Stand der Technik,

- Fig. 5-10: Ausführungsformen einer Hakenverbindung mit einem oder mehreren zusätzlichen Sperrelementen mit recht- eckigem Querschnitt,
- Fig. 11-14: eine Konstruktion einer Hakenverbindung mit ei- nem oder mehreren zusätzlichen Sperrelementen, die einen runden Querschnitt aufweisen,
- Fig. 15/16: Ausführungsformen einer Hakenverbindung mit Sperrelementen, die im verlegten Zustand der Paneele in solche Flächen der Hakenelemente eingelassen sind, die etwa horizontal liegen,
- Fig. 17-20: eine Ausführungsform einer Hakenverbindung mit einem Sperrelement mit einer federnden Rastlasche, die während der Montage der Hakenverbindung selbsttä- tig in eine zugeordnete Rastvertiefung eingreift
- Fig. 21: eine Hakenverbindung mit einem als Krallstück ausge- bildeten Sperrelement,
- Fig. 22: eine Hakenverbindung mit einem als Klammer ausgebil- deten Sperrelement an der Unterseite der Paneele,
- Fig. 23: ein weiteres Sperrelement mit einer federnden Rast- lasche sowie eine Sperrnut, die zur Aufnahme des Sperrelements angepasst ist,
- Fig. 24: eine Hakenverbindung mit dem Sperrelement gemäß Fig. 23, während des Fügevorgangs,
- Fig. 25: eine Hakenverbindung mit dem Sperrelement gemäß Fig. 23 im eingerasteten Zustand,
- Fig. 26: eine Hakenverbindung mit denselben Sperrnuten und derselben Sperrausnehmung, wie gemäß Fig. 25, wobei das Rastlaschen-Sperrelement ersetzt ist durch ein Sperrelement mit rundem Querschnitt.

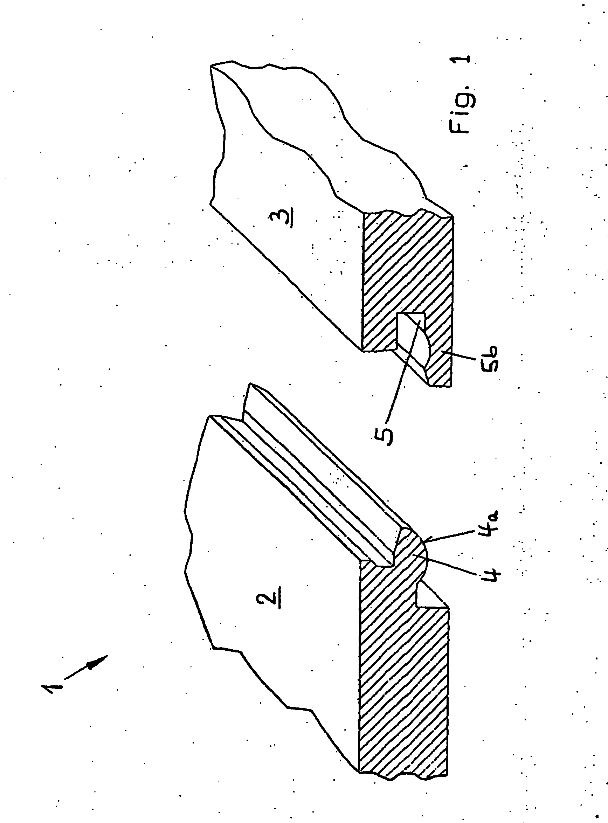

Die Ausführungsbeispiele der Figuren 1-16, 18-22 und 24-26 von Befestigungssystemen sind nicht durch Anspruch 1 umfasst. Die Figuren 18-20, 24 und 25 zeigen jedoch ein Sperrelement und dienen daher dem Verständnis, wie ein erfindungsgemäßes Sperrelement in einem Befestigungssystem verwendbar ist.

Nach Figur 1 der Zeichnung ist eine Art der Halteprofile eines Befestigungssystems 1 perspektivisch dargestellt. An der jeweils gegenüberliegenden Schmalseite von Paneelen 2 und 3 sind korrespondierende Halteprofile vorgesehen, so dass sich die benachbarten Paneele 2 und 3 miteinander verbinden lassen. Bei dieser Art der Halteprofile handelt es sich um eine modifizierte Nut- und Federverbindung, bei der die Feder 4 eine Hinterschneidung in der unteren Nutwand der Nut 5 hintergreift, so dass beide Paneele 2 und 3 im verlegten Zustand gegen ein Auseinanderziehen in der Ebene der verlegten

Paneele 2 und 3 und senkrecht zur Richtung der verriegelten Schmalseiten gesichert sind.

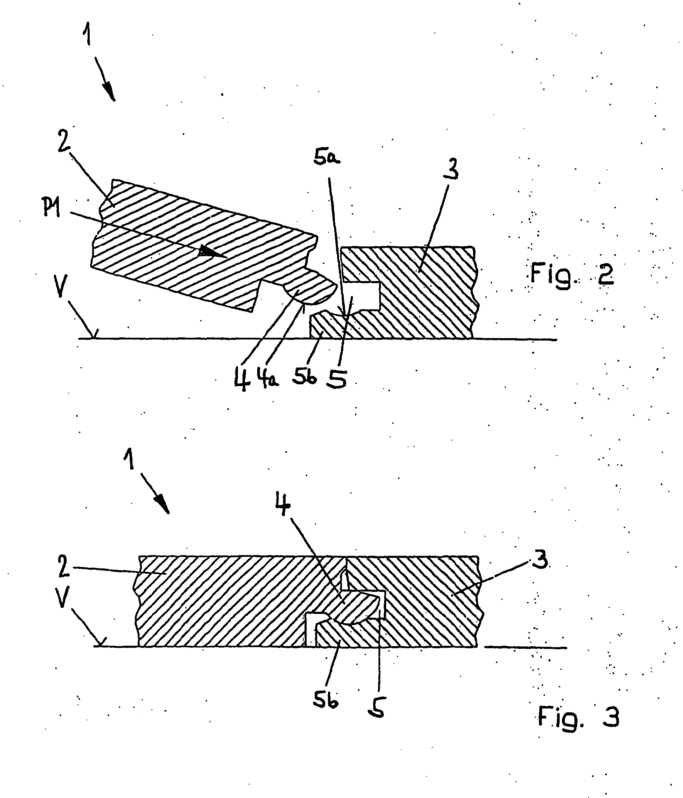

Figur 2 zeigt das schräge Ansetzen eines neuen Paneels 2. Dabei wird stets die Feder 4 des neuen Paneels 2 in Pfeilrichtung P1 mit der Nut 5 des verlegten Paneels 3 in Eingriff gebracht und das neue Paneel 2 anschließend auf den Verlegeuntergrund V herabgeschwenkt, bis die in Figur 3 dargestellte Lage erreicht ist. Es ist leicht verständlich, dass ein gekrümmter Bereich 4a des Querschnitts der Feder 4 eine im Querschnitt gekrümmte Vertiefung 5a in der unteren Nutwand 5b der Nut 5 derart hintergreift, dass ein ebenes Auseinanderschieben der Paneele 2 und 3 senkrecht zu den verriegelten Schmalseiten verhindert ist.

An den übrigen Schmalseiten eines Paneels 2 bzw. 3, das mit dem

Befestigungssystem 1 ausgestattet ist, sind korrespondierende Halteprofile mit Hakenelementen 6 und 7 vorgesehen. Diese haben den Vorteil, dass sie sich sozusagen gleichzeitig mit der Verriegelung der gemäß Figuren 1-3 beschriebenen Halteprofile, Feder 4 und Nut 5, nach dem schrägen Ansetzen durch ein Herabschwenken des neuen Paneels 2 auf den Verlegeuntergrund V miteinander verhaken. Eine irgendwie geartete seitliche Fügebewegung ist zur Herstellung der sich ergebenden Hakenverbindung 8 nicht erforderlich.

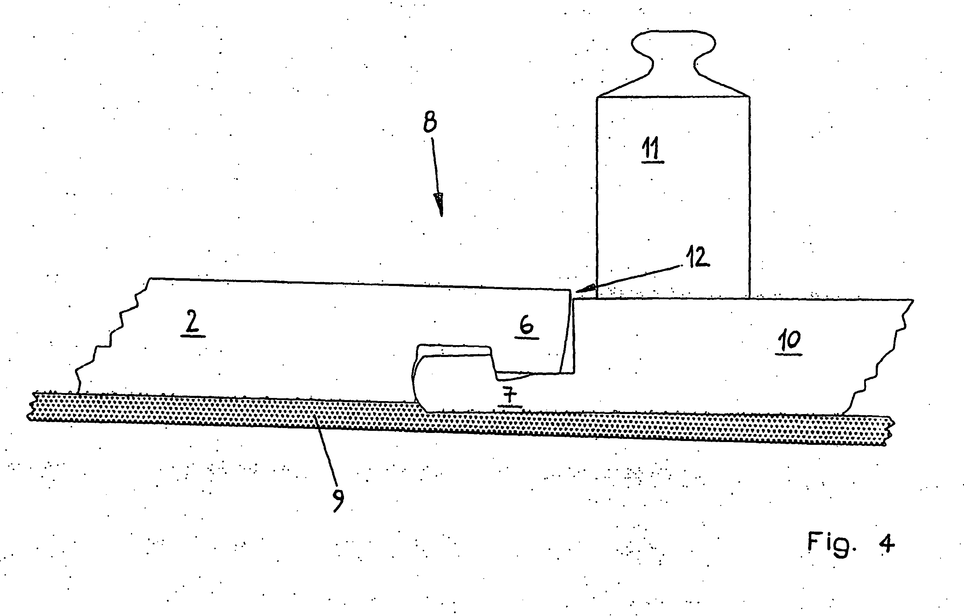

Die gemäß Figur 4 dargestellte Hakenverbindung 8 gerät außer Eingriff. Dies beispielsweise auf unebenen Untergründen, mit Luft zwischen den Paneelen und dem Verlegeuntergrund V sowie dann, wenn eine weiche trittschalldämmende Zwischenlage 9 zwischen den Paneelen und Verlegeuntergrund V angeordnet ist. In Figur 4 verdeutlicht das symbolisch dargestellte Gewicht 11, wie ein Paneel, dessen Hakenelement dem Verlegeuntergrund zugewandt ist, unter der Last eines Gewichts 11 in eine weiche trittschalldämmende Zwischenlage 9 einsinkt. Hierbei kommt es zu einem Höhenversatz 12 an der Oberfläche der Paneele 2 und 10.

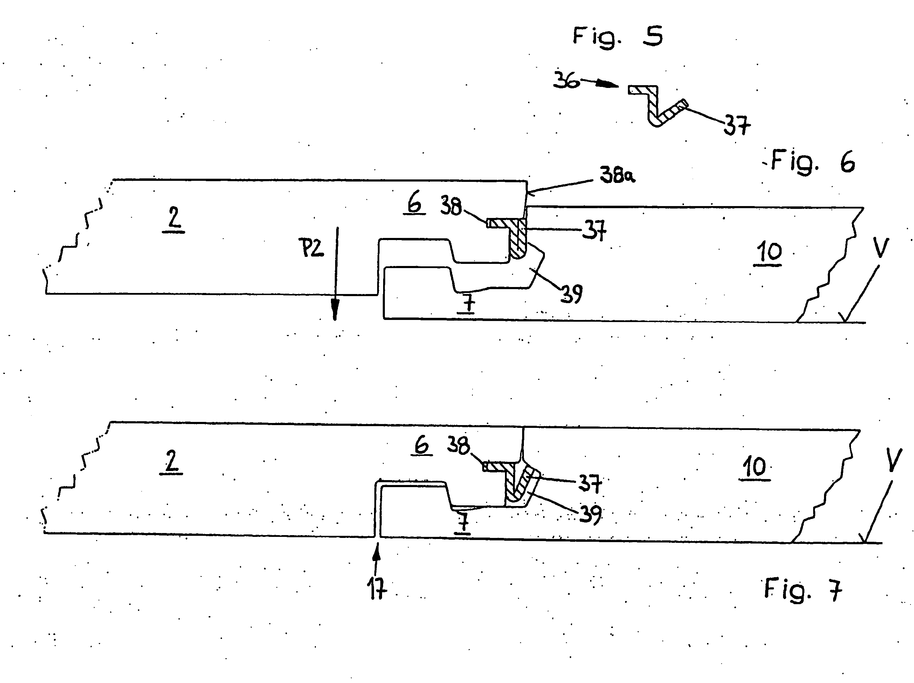

Die Figuren 5-10 stellen unterschiedliche Ausführungsformen von Hakenverbindungen 8 dar, die alle mit einem zusätzlichen Sperrelement 13 verriegelt sind. Das Sperrelement 13 verhindert ein Auseinanderbewegen der Hakenverbindung 8 in einer Richtung senkrecht zur Ebene der verlegten Paneele 2 und 10. Auch bei einer Belastung gemäß Figur 4 verhindert das zusätzliche Sperrelement 13 einen Höhenversatz der verhakten Paneele 2 und 10. Das Sperrelement 13 weist in den Ausführungsformen der Figuren 5-10 einen rechteckigen Querschnitt auf. Zur Aufnahme des Sperrelements 13 sind Sperrnuten 14 und 15 vorgesehen, die sich im verhakten Zustand der Hakenelemente 6 und 7 exakt so gegenüberliegen, dass sich eine gemeinsame Sperrausnehmung 16 ergibt, in die das Sperrelement 13 in einer Richtung senkrecht zur der dargestellten Zeichnungsebene eingefügt wird. Die Ausführungsform gemäß Figur 5 zeigt einen freien Zwischenraum 17 zwischen dem freien Ende des Hakenelements 7, das dem Verlegeuntergrund V zugewandt ist, und der Schmalseite des zugeordneten Paneels 2.

In Figur 6 hingegen ist an der gleichen Stelle kein Spiel vorgesehen. Stattdessen ist auch hier eine hinterschnittene Verbindung 18 vorgesehen, die ebenfalls in einer Richtung senkrecht zur der Ebene der verlegten Paneele 2 und 10 verriegelt. An dem Paneel 2, dessen Hakenelement 6 der Oberfläche zugewandt ist, weist das Hakenelement 6 an einer frei hervorstehenden Fläche der Schmalseite die Sperrnut 14 auf, wohingegen die Sperrnut 15 des gegenüberliegenden Hakenelements 7 der Hakenverbindung 8 an einer zurückstehenden Fläche 19 des Hakenelements 7 vorgesehen ist. Das gleiche gilt für die Ausführungsform gemäß Figur 6.

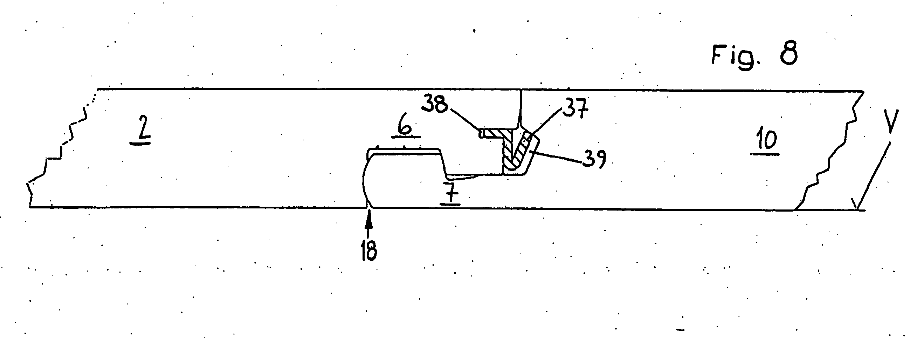

Die Figuren 7 und 8 zeigen Beispiele einer Hakenverbindung 8, bei denen das ein zusätzliches Sperrelement 22 auf der Schmalseite an der frei hervorstehenden Fläche 20 eines Hakenelements 7 vorgesehen ist, das dem Verlegeuntergrund V zugewandt ist. An dem korrespondierenden Hakenelement 6 ist die Sperrnut 15 demgemäß an einer zurückstehenden Fläche 21 des Hakenelements 6 an der Schmalseite des Paneels 2 angeordnet. Figur 7 zeigt ein Beispiel, bei dem die Hakenelemente 6 und 7 im Bereich des Sperrelements 22 einen freien Zwischenraum 17 aufweisen. Gemäß Figur 8 hingegen ist im Bereich des Sperrelements 22 kein freier Zwischenraum 17 zwischen den Hakenelementen 6 und 7 vorgesehen. Stattdessen erhöht eine hinterschnittene Verbindung 18 die Festigkeit der Hakenverbindung 8 gegen ein Auseinanderschieben in einer Richtung senkrecht zu der Ebene der verlegten Paneele 2und 10.

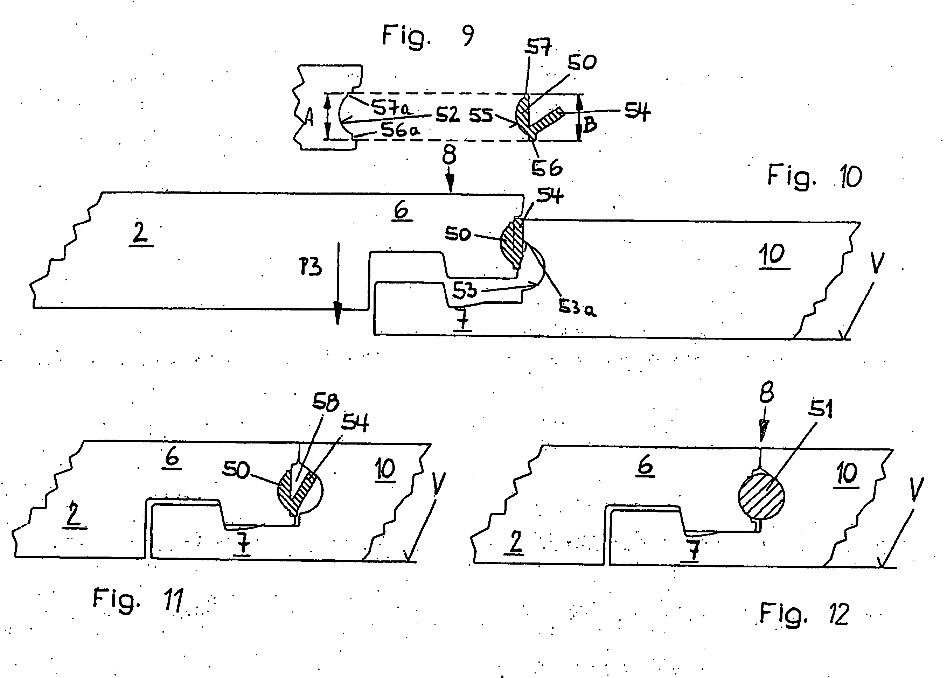

Gemäß Figuren 9 und 10 sind Konstruktionen dargestellt, in denen jede Hakenverbindung 8 mit zwei Sperrelementen 13 und 22 ausgestattet ist. Gemäß Figur 9 sind die Positionen der Sperrelemente 13 und 22 aus Figur 5 und Figur 7 zusammengenommen. In Figur 10 sind die Positionen der Sperrelemente 13 und 22 gemäß Figuren 6 und 8 zusammengenommen. Figur 9 ist ein weiteres Beispiel für eine Hakenverbindung 8, bei der das dem Verlegeuntergrund V zugewandte Hakenelement 7 an seinem freien Ende einen Zwischenraum 17 zu der Schmalseite des Hakenelements 6 des benachbarten Paneels 2 aufweist, wohingegen Figur 10 an der gleichen Stelle eine hinterschnittene Verbindung 18 vorsieht.

Gemäß Figuren 11-14 sind Sperrelemente mit rundem Querschnitt vorgesehen. Gemäß Figur 11 ist eine Sperrnut mit halbkreisförmigem Querschnitt an dem äußeren freien Ende des Hakenelements 6 angeformt, das der Oberseite des Paneels 2 zugewandt ist. An dem korrespondierenden Hakenelement 7 ist eine Sperrnut 24 demgemäß an einer zurückstehenden Fläche 19 des Hakenelements 7 angebracht, so dass die beiden Sperrnuten 23 und 24 gemeinsam eine Sperrausnehmung 25 mit kreisförmigem Querschnitt ergeben, in der ein Sperrelement 26 angeordnet ist. Das Gleiche gilt für die Ausführungsform gemäß Figur 12. In Figur 11 ist zwischen dem dem Verlegeuntergrund V zugewandten Hakenelement 7 des einen Paneels 10 und einer zurückstehenden Fläche 21 des Hakenelements 6 an der Schmalseite des benachbarten Paneels 2 ein freier Zwischenraum 17 vorgesehen, wohingegen gemäß Figur 12 an der gleichen Stelle eine hinterschnittene Verbindung 18 integriert ist.

Im Unterschied zu Fig. 12 ist gemäß Figur 13 der Ort für ein kreisrundes Sperrelement 27 an das freie Ende eines Hakenelements 7 eines Paneels 10 verlagert. Eine Sperrnut 28 des korrespondierenden Hakenelements 6 ist dementsprechend an einer an der Schmalseite zurückstehenden Fläche 21 des benachbarten Paneels 2 vorgesehen. Figur 13 ist ein Beispiel dafür, dass das Sperrelement 27 an einem Ort vorgesehen sein kann, bei dem ein freier Zwischenraum 17 zwischen dem äußeren freien Ende des unteren Hakenelements 7 und der gegenüberliegenden Fläche 21 des korrespondierenden Hakenelements 6 vorgesehen ist. Eine Ausführungsform ohne Freiraum 17, mit flach aneinander liegenden ebenen Flächen sowie eine Ausführungsform mit einer hinterschnittenen Verbindung 18 gemäß dem unteren Hakenelement 7 der Figur 12 kann ebenfalls mit einer Sperrausnehmung und einem Sperrelement 27 ausgestattet werden.

Gemäß Figur 14 ist eine besonders feste Hakenverbindung 8 dargestellt, bei der zwei Sperrelemente 26 und 27 mit kreisförmigem Querschnitt zum Einsatz kommen. Die Orte der Sperrelemente 26 und 27 sind zusammengenommen aus den Ausführungsformen gemäß Figur 11 und Figur 13.

In Figur 15 und 16 ist der verlegte Zustand von Paneelen 2 und 10 mit einer fertigen Hakenverbindung 8 dargestellt. Dabei sind Sperrnuten 30, 31, 32 und 33 in Flächen vorgesehen sind, die etwa parallel zur Ebene der verlegten Paneele liegen. Wiederum sind die Sperrnuten 30 und 32 des einen Hakenelements 6 sowie die Sperrnuten 31 und 33 des korrespondierenden Hakenelements 7 so angeordnet, dass sie sich exakt gegenüberliegen und gemeinsam je eine Sperrausnehmung bilden, in der ein Sperrelement 34 bzw. 35 angeordnet ist. Sowohl gemäß Figur 15 als auch gemäß Figur 16 ist es möglich, auf eines der Sperrelemente 34 bzw. 35 und die entsprechende Sperrausnehmung zu verzichten, um die Geometrie zu vereinfachen. Da die Sperrelemente 34 und 35 ein Auseinanderbewegen der Hakenverbindungen 8 in einer Richtung senkrecht zu der Ebene der Paneele 2 und 10 verhindern müssen, sind die Sperrelemente 34 und 35 so ausgelegt, dass sie sich seitlich in die Nutwände der Sperrnuten30, 31, 32 und 33 festsetzen. In den dargestellten Ausführungsbeispielen sind zu diesem Zweck an der Oberfläche der Sperrelemente hervorstehende Krallelemente 34a und 35a vorgesehen. Diese können auch nach Art von Widerhaken ausgebildet sein, wobei die Widerhaken in der einen Sperrnut 30 und die Widerhaken in der gegenüberliegenden Sperrnut 31 derselben Sperrausnehmung entgegengerichtet angeordnet sind. Das gleiche gilt für die Widerhaken in den Sperrnuten 32 und 33.

Eine weitere Ausführungsform einer Hakenverbindung 8 ist in den Figuren 17 - 20 dargestellt. Figur 17 zeigt ein loses Sperrelement 36 mit einer federnden Rastlasche 37, die im dargestellten entspannten Zustand weit abgespreizt ist. Figur 18 zeigt das allmähliche Ineinanderfügen der Hakenverbindung 8 gemäß Pfeilrichtung P2. Dabei ist das Sperrelement 36 gemäß Figur 17 in einer Nut 38 in der frei hervorstehenden Fläche 38a des oberen Hakenelements 6 eingesetzt. Die federnde Rastlasche 37 ist durch die Fügebewegung selbst zurückgeklappt. Sobald die Hakenverbindung 8 die in Figur 19 dargestellte Verriegelungslage nahezu erreicht, federt die Rastlasche 37 des Sperrelements 36 selbsttätig in eine Rastvertiefung 39 des korrespondierenden Hakenelements 7. In der gezeigten Stellung ist die Rastlasche 37 weniger weit abgespreizt als in ihrer nach Fig. 17 gezeigten entspannten Lage, so dass sie permanent einen Federdruck gegen die Rastvertiefung 39 ausübt und die Hakenverbindung 8 sicher arretiert.

Das Sperrelement 36 kann durch einen Verlegehandwerker als loses Element in der dafür vorgesehenen Nut 38 des oberen Hakenelements 6 eingesetzt werden oder herstellerseitig an dem Hakenelement 6 vormontiert sein. Das Sperrelement 36 kann sich über die gesamte Länge der Schmalseite eines Paneels erstrecken oder nur über einen Teil der Länge der Schmalseite. In dem Ausführungsbeispiel erstreckt es sich von einem Ende der Schmalseite über deren halbe Länge.

In Figur 19 ist dargestellt, dass zu beiden Seiten der Rastlasche 37 Freiräume vorhanden sind. Diese können beispielsweise dazu dienen, zwecks Demontage der Paneele 2 und 10 das Sperrelement 36 mit Hilfe einer Spitzzange aus der Hakenverbindung 8 herauszuziehen und diese dadurch zu entriegeln.

Die Figuren 18 und 19 zeigen wiederum eine Konstruktion, bei der das dem Verlegeuntergrund V zugewandte Hakenelement 7 an seinem äußeren Ende einen freien Zwischenraum 17 zu dem korrespondierenden Hakenelement 6 aufweist.

Eine weitere Ausführungsform der Hakenverbindung mit einem Sperrelement, 36 das eine selbsttätige Rastlasche 37 aufweist, ist in Figur 20 dargestellt. Der einzige Unterschied zu der Ausführungsform nach Fig. 18 und Fig. 19 besteht darin, dass das dem Verlegeuntergrund V zugewandte Hakenelement 7 des Paneels 10 an seinem freien äußeren Ende keinen Freiraum 17 zu dem korrespondierenden Hakenelement 6 des verbundenen Paneels 2 aufweist. Stattdessen ist wiederum eine hinterschnittene Verbindung 18 vorgesehen, die ebenso wie das Sperrelement 36 ein Auseinanderbewegen der Hakenverbindung 8 in einer Richtung senkrecht zu der Ebene der verlegten Paneele 2 und 10 verhindert.

Eine andere Konstruktion eines Befestigungssystems 1 sieht gemäß Fig. 21 ein Sperrelement in Form eines Krallstücks 40 vor, das im montierten Zustand zwischen sich hintergreifenden Hakenflächen 41 und 42 der Hakenelemente 6 und 7 angeordnet ist. Das Krallstück 40 weist Krallelemente 40 a auf, die in die Oberfläche der Hakenflächen 41 und 42 greifen und eine vertikale Auseinanderbewegung der Hakenelemente 6 und 7 verhindern. Um Platz für das Krallstück 40 zu schaffen und Zwängungen zwischen den Hakenelementen 6 und 7 zu vermeiden, ist zwischen den sich hintergreifenden Hakenflächen 41 und 42 ein freier Zwischenraum 43 gebildet. In der Darstellung der Fig. 21 ist das Krallstück 40 im montierten Zustand der Hakenverbindung 8 gezeigt. Das Krallstück 40 ist in einer dafür vorgesehenen Ausnehmung 44 des Hakenelements 6 befestigt und schmiegt sich beginnend an der Ausnehmung 44 bis über die Hakenfläche 41 an dem Hakenelement 6 an. Die Ausnehmung 44 für das Krallstück 40 ist an dem Teil des Hakenelements 6 angeordnet, der das korrespondierende Hakenelement 7 hintergreift, wobei die Öffnung der Ausnehmung 44 an einer zum Verlegeuntergrund gewandten Fläche 45 des Hakenelements 6 angeordnet ist. Das Krallstück 40 ist dabei derart umgebogen, dass es in den Zwischenraum 43 hineinragt, den die sich hintergreifenden Hakenflächen 41 und 42 bilden.

Das Krallstück 40 ist vor der Montage L-förmig ausgebildet. Ein erster Schenkel des L-förmigen Krallstücks steckt in der Ausnehmung 44 des Hakenelements 6. Der zweite Schenkel ist mit den Krallelementen versehen und weist vor der Montage etwa senkrecht von der Schmalseite des Paneels 10 weg. Letzterer Schenkel wird während der Montage automatisch in den Zwischenraum 43 der sich hintergreifenden Hakenflächen 41 und 42 hineingebogen.

Die in Fig. 22 gezeigte Konstruktion eines Befestigungssystems macht von einem Sperrelement in Form einer Klammer 46 Gebrauch. Zu diesem Zweck weist jedes Paneel 2 und 10 auf seiner dem Verlegeuntergrund V zugewandten Unterseite hinterschnittene Bodenausnehmungen 47 und 48 auf, von denen je eine im Bereich jedes Hakenelements 6 bzw. 7 an der Unterseite des Paneels 2 bzw. 10 angeordnet ist. In je einer Bodenausnehmungen 47 und 48 zweier benachbarter Paneele 2 und 10 greift eine Klammer 46 ein. Damit die Klammer 46 ein Auseinanderbewegen der Hakenverbindung 8 in einer Richtung senkrecht zu der Ebene der verlegten Paneele 2 und 20 verhindert, weist jede Bodenausnehmung 47 und 48 eine Hinterschneidung auf. Nach Fig. 22 ist die Hinterschneidung der Bodenausnehmung 47 eines ersten Paneels 2 im zusammengefügten Zustand zweier Paneele entgegengesetzt ausgerichtet zu der Hinterschneidung der Bodenausnehmung 48 eines zweiten Paneels 10. Die Klammer 46 ist U-förmig ausgebildet. Es ist selbstverständlich, dass die Klammer 46 auch ein ebenes seitliches Auseinanderschieben rechtwinklig zu den Hakenelementen 6 und 7 der Schmalseite der Paneele 2 und 10 verriegelt und somit die Funktion der Hakenverbindung 8 unterstützt.

Fig. 23 zeigt ein Sperrelement 50 mit besonderem Querschnitt, das in der Praxis durch das in Fig. 26 gezeigte Sperrelement 51 ersetzt werden kann. Letzteres Sperrelement 51 weist einen einfachen runden Querschnitt auf. Außerdem zeigt Fig. 23 eine leere Sperrnut 52, in der das Sperrelement 51 verliersicher aufnehmbar ist. Die Verliersicherheit gewährleistet während der Handhabung eines Paneels 2 und während der Verhakung der Hakenverbindung 8 gemäß Pfeilrichtung P3, dass das Sperrelement 50 nicht aus der Sperrnut 52 herausfällt. Damit ein Austausch der Sperrelemente 50 und 51 möglich ist, sind die in den Hakenelementen 6 und 7 vorgesehenen Sperrnuten 52 und 53 in besonderer Weise an die Geometrie der unterschiedlichen Sperrelemente 50 und 51 angepasst.

Das Sperrelement 50 ist eine Weiterbildung des in Fig. 17 dargestellten Sperrelements 36. Es weist eine Rastlasche 54 auf, die in Fig. 23 in einem weit abgespreizten entspannten Zustand dargestellt ist. An einem Rücken 55 weist das Sperrelement 50 eine runde Form auf, die sich gemäß Fig. 24 passend in die Sperrnut 52 des Hakenelements 6 einfügt. Das Sperrelement 50 ist mit Halteelementen 56 und 57 versehen, über die es in der Sperrnut 52 des Hakenelements 6 verliersicher festlegbar ist. Die Halteelemente 56 und 57 dienen außerdem dazu ein Verrutschen bzw. eine Verdrehung des Sperrelements 50 in der Sperrnut 52 bzw. in der durch die Sperrnuten 52 und 53 gebildeten Sperrausnehmung 58 zu verhindern. Die Halteelemente 56 und 57 sind in der vorliegenden Ausführungsform als stumpfe Nocken ausgebildet. An der leeren Sperrnut 52 der Fig. 23 ist zu sehen, dass diese an den Rändern ihres halbkreisförmigen Querschnitts Materialausnehmungen 56a und 57a aufweist, die zur Aufnahme der Halteelemente 56 und 57 dienen. Das an der Sperrnut 52 angegebene Maß A ist etwas geringer ausgeführt als das an dem Sperrelement 50 angegebene Maß B. Dies bewirkt die verliersichere Klemmung des Sperrelements 50 in der Sperrnut 52. In einer anderen Ausführungsform sind die Halteelemente des Sperrelements 50 als Widerhaken oder Krallelemente ausgebildet (nicht dargestellt), die in einem Teil der Nutwand der Sperrnut 52 festsetzbar sind, und das Sperrelement 50 verliersicher an dem Hakenelement 6 festhalten. Die Materialausnehmungen in der Sperrnut 52 sind bei dieser Ausführung nicht erforderlich.

Fig. 24 zeigt den Fügevorgang einer Hakenverbindung 8. Ein Paneel 2 wird nämlich gemäß Pfeilrichtung P3 auf den Verlegeuntergrund V herabgeschwenkt, wodurch die Hakenelemente 6 und 7 der Paneele 2 und 10 sich miteinander verhaken. Es ist leicht erkennbar, dass das Sperrelement 50 sicher in der Sperrnut 52 gehalten ist, während die Hakenelemente auf die beschriebene Weise verbunden werden. Sobald das freie Ende der Rastlasche 54 eine obere Kante 53a der Sperrnut 53 passiert hat, federt die Rastlasche 54 selbsttätig in die Sperrnut 53, welche ihr als Rastvertiefung dient und verriegelt die Hakenverbindung.

### Bezugszeichenliste

- 1: Befestigungssystem
- 2: Paneel
- 3: Paneel
- 4: Feder
- 4a: gekrümmter Bereich
- 5: Nut
- 5a: gekrümmte Vertiefung
- 5b: untere Nutwand
- 6: Hakenelement
- 7: Hakenelement
- 8: Hakenverbindung
- 9: Trittschall dämmende Zwischenlage
- 10: Paneel
- 11: Gewicht
- 12: Höhenversatz
- 13: Sperrelement
- 14: Sperrnut
- 15: Sperrnut
- 16: Sperrausnehmung
- 17: Zwischenraum
- 18: hinterschnittene Verbindung
- 19: zurückstehende Fläche
- 20: hervorstehende Fläche
- 21: zurückstehende Fläche
- 22: Sperrelement
- 23: Sperrnut
- 24: Sperrnut
- 25: Sperrausnehmung
- 26: Sperrelement
- 27: Sperrelement
- 28: Sperrelement
- 30: Sperrnut
- 31: Sperrnut
- 32: Sperrnut
- 33: Sperrnut
- 34: Sperrelement
- 34a: Krallelement
- 35: Sperrelement
- 35a: Krallelement
- 36: Sperrelement
- 37: Rastlasche
- 38: Nut
- 38a: hervorstehende Fläche
- 39: Rastvertiefung
- 40: Krallstück
- 40a: Krallelement
- 41: Hakenfläche
- 42: Hakenfläche
- 43: Zwischenraum
- 44: Ausnehmung
- 45: Fläche
- 46: Klammer
- 47: Bodenausnehmung
- 48: Bodenausnehmung
- 50: Sperrelement
- 51: Sperrelement
- 52: Sperrnut
- 53: Sperrnut
- 54: Rastlasche
- 55: Rücken
- 56: Halteelement
- 57: Halteelement
- 58: Sperrausnehmung
- A: Maß
- B: Maß
- P1: Pfeilrichtung
- P2: Pfeilrichtung
- P3: Pfeilrichtung
- V: Verlegeuntergrund

## Patentansprüche

1. Sperrelement (36,50) als Zusatz für ein Befestigungssystem (1) für viereckige tafelförmige Paneele (2, 3, 10), insbesondere Fußbodenpaneele, mit an den Schmalseiten der Paneele (2, 3, 10) angeordneten Halteprofilen, von denen gegenüberliegend angeordnete Halteprofile derart zueinander passen, dass gleichartige Paneele (2, 3, 10) miteinander verbindbar sind, mit gegenüberliegend angeordneten ersten Halteprofilen, die so ausgebildet sind, dass an einem in erster Reihe liegenden Paneel (2, 3, 10) in zweiter Reihe ein neues Paneel (2) verriegelbar ist, indem das neue Paneel (2) zunächst in Schrägstellung relativ zu dem liegenden Paneel (3) an das liegende Paneel (3) angefügt und nachfolgend in die Ebene des liegenden Paneels (3) herabgeschwenkt wird, sowie mit gegenüberliegend angeordneten zweiten Halteprofilen, die korrespondierende Hakenelemente (6, 7) aufweisen, wobei mit einem der Hakenelemente (6, 7) des neuen Paneels (2) und einem Hakenelement (6, 7) eines bereits in zweiter Reihe liegenden Paneels (3) durch das Herabschwenken des neuen Paneels (2) eine Hakenverbindung (8) herstellbar ist, wobei jeder Hakenverbindung (8) ein solches Sperrelement (36, 50) zugeordnet ist, das im verhakten Zustand zweier Paneele (2, 3, 10) ein Lösen der Hakenverbindung (8) in einer Richtung senkrecht zu der Ebene der verlegten Paneele (2, 3, 10) unterbindet,
**dadurch gekennzeichnet, dass** das Sperrelement (36, 50) eine federnde Rastlasche (37, 54) aufweist und derart ausgebildet ist, dass es in einer Sperrnut eines der Hakenelemente (6) eines ersten Paneels (2) anzuordnen ist, wobei eine Sperrnut des zugeordneten Hakenelements (7) der gegenüberliegenden Schmalseite eines zweiten Paneels (10) eine hinterschnittene Rastvertiefung (39, 53) bildet, in die die Rastlasche (37, 54) des Hakenelements (6) des ersten Paneels (2) während der Montage selbsttätig einrastbar ist, und wobei das Sperrelement (36, 50) so ausgebildet ist, dass die Rastlasche (37, 54) im entspannten Zustand von der Schmalseite weit hervorsteht, so dass die Rastlasche (37, 54) während des Herabschwenkens des ersten Paneels (2) in die Ebene der verlegten Paneele mit dem Hakenelement (7) des zweiten Paneels (10) in Berührung kommt und automatisch soweit zurückklappbar ist, dass die Rastlasche (37, 54) an der Schmalseite nicht mehr über das äußere Ende des Hakenelements (6) des ersten Paneels hinausragt.

## Claims

1. Locking element (36, 50) as a supplement for use in a fixing system (1) for rectangular, tabular panels (2, 3, 10), particularly floor panels, comprising holding profiles arranged on the narrow side of the panels (2, 3, 10) and of which mutually oppositely arranged holding panels match each other in such a way that like panels (2, 3, 10) are connectible to each other, further comprising mutually oppositely arranged first holding profiles configured in such a way that to a panel (2, 3, 10) installed in a first row a new panel (2) can be locked in a second row by first joining the new panel (2) to the already installed panel (3) in an inclined position with respect to the already installed panel (3) and thereafter turning it down into the plane of the already installed panel (3), further comprising mutually oppositely arranged second holding profiles having corresponding hook elements (6, 7), wherein a hook connection (8) can be established with one of the hook elements (6, 7) of the new panel and a hook element (6, 7) of a panel (3) already installed in a second row by a downward movement of the new panel, wherein such a locking element (36, 50) is assigned to each hook connection (8) and, in the hooked condition of two panels (2, 3, 10), prevents the hook connection (8) from becoming unhooked in a direction vertical to the plane of the already installed panels (2, 3, 10), **characterized in that** the locking element (36, 50) includes a resilient locking tongue (37,54) and is designed in such a manner that it is intended to be arranged in a locking groove of one of the hook elements (6) of a first panel (2), a locking groove of the associated hook element (7) of the opposite narrow side of a second panel (10) including an undercut locking recess (39, 53) in which the locking tongue (37, 54) of the hook element (6) of the first panel (2) can automatically lock during mounting, and the locking element (36, 50) being designed in such a manner that the locking tongue (37, 54) in the relaxed state protrudes from the narrow side as far that the locking tongue (37, 54) during moving the first panel (2) downwards into the plane of the installed panels comes into contact with the hook element (7) of the second panel (10) and can flap back as far that the locking tongue (37, 54) does no longer protrude over the outer end of the hook element (6) of the first panel.

## Revendications

1. Elément de blocage (36, 50) à utiliser comme un supplément d'un système de fixation (1) pour des panneaux quadrangulaires en forme de plaques (2, 3, 10), notamment des panneaux de plancher, comportant des profilés de retenue disposés sur les côtés étroits des panneaux (2, 3, 10), dont les profilés de retenue opposés correspondent l'un à l'autre de cette façon que des panneaux similaires (2, 3, 10) peuvent être reliés l'un à l'autre, et comportant premiers profilés de retenue qui sont formés de cette façon qu'il peut fixé à un panneau (2, 3, 10) disposé en la première ligne un nouveau panneau (2) en la deuxième ligne, en joignant tout d'abord le nouveau panneau (2) au panneau installé (3) de façon inclinée et après basculant ledit panneau vers le plan du panneau installé (3), et comportant deux profilés de retenue opposés portant des éléments crochets (6, 7) correspondants, une liaison par crochets (8) pouvant être faite avec l'un des éléments crochets (6, 7) du nouveau panneau (2) et un élément crochet (6, 7) d'un panneau (3) déjà installé en la deuxième ligne, en basculant le nouveau panneau (2) vers le bas, un tel élément de blocage étant assigné à chacune des liaisons par crochets (8), ledit élément empêchant, en état verrouillé de deux panneaux (2, 3, 10), une déverrouillage de la liaison par crochet (8) en une direction perpendiculaire par rapport au plan des panneaux installés (2, 3, 10), **caractérisé en ce que** l'élément de blocage (36, 50) comporte une languette élastique de verrouillage (37, 54) et est configuré de cette façon qu'il doit être arrangé dans une rainure de verrouillage de l'un des éléments de crochet (6) d'un premier panneau (2), une rainure de verrouillage de l'élément crochet (7) assigné du côté étroit opposé d'un deuxième panneau (10) formant un creux contre-dépouillé de verrouillage (39, 53), dans lequel peut être verrouillé la languette de
verrouillage (37, 54) de l'élément crochet automatiquement lors du montage, et l'élément de blocage (36, 50) étant configuré de cette façon que la languette de verrouillage (37, 50), en l'état relaxé, fait saille loin du côté étroit, de sorte que lors du basculement du premier panneau (2) vers le bas et dans le plan des panneaux installés, la languette de verrouillage (37, 54) entre en contact avec l'élément crochet (7) du deuxième panneau (10) et peut être rabattu automatiquement vers l'arrière et si loin que la languette de verrouillage (37, 54), sur le côté étroit, ne fait plus saillie en dehors l'extrémité extérieure de l'élément crochet (6) du premier panneau.
